# EUROPÄISCHE PATENTSCHRIFT

(11) **EP 3 584 858 B1**
(45) Veröffentlichungstag und Bekanntmachung des Hinweises auf die Patenterteilung: **10.11.2021**
(21) Anmeldenummer: 19178862.9
(22) Anmeldetag: 06.06.2019
(51) Int. Cl.: H01M 4/04, H01M 4/139, H01M 4/62, H01M 4/02

(54) **VERFAHREN ZUR HERSTELLUNG EINER BATTERIE**
METHOD FOR PRODUCING A BATTERY
MÉTHODE POUR LA PRODUCTION D'UNE BATTERIE

(30) Priorität: 20.06.2018 DE 102018114804
(43) Veröffentlichungstag der Anmeldung: 25.12.2019
(73) Patentinhaber: Volkswagen Aktiengesellschaft, 38436 Wolfsburg (DE); Audi AG, 85045 Ingolstadt (DE); Dr. Ing. h.c. F. Porsche AG, 71287 Weissach (DE)
(72) Erfinder: Herrmann, Mirko, Mountain View, CA California 94041 (US); Speidel, Angela-Kristina, 38440 Wolfsburg (DE)
(74) Vertreter: Kirschner, Sebastian

(56) Entgegenhaltungen:
- EP-A1- 3 316 353
- DE-A1-102012 215 921
- US-A1- 2017 033 350
- US-A1- 2018 138 493

## Beschreibung

Die Erfindung betrifft ein Verfahren zur Herstellung einer Batterie gemäß den Merkmalen des Patentanspruchs 1.

Eine Batterie weist eine oder mehrere Zellen auf. Eine Zelle weist insbesondere eine Anode, eine Kathode, einen Separator und einen Elektrolyt auf. Die Elektrode besteht dabei aus einem Aktivmaterial und einem Ableiter. Als Aktivmaterialien werden Materialien in den Elektroden bezeichnet, in denen die chemischen Stoffänderungsprozesse, nämlich die Energiespeicherung und die Energieabgabe stattfinden. Die C-Rate beschreibt den auf die Nennkapazität normierten Lade- oder Entladestrom in Ampere. Die Nennkapazität ist die gespeicherte Elektrizitätsmenge einer vollständig geladenen Zelle oder Batterie, die beim Entladen unter definieren Bedingungen entnommen werden kann.

Bei einer konventionellen Batteriezelle haben die Aktivmaterialien einen Gewichtsanteil von etwa 45 bis 50 %. Der restliche Gewichtsanteil wird durch das Gehäuse, den Elektrolyt, die Ableiter für die Anode und die Kathode und den Separator gebildet. Diese Bestandteile sind für die Batterie leider unverzichtbar, jedoch ist es wünschenswert, das Verhältnis zwischen Aktiv- und Nichtaktivmaterialien zugunsten der Aktivmaterialien zu verbessern. Dies kann durch Erhöhung der Kapazitätsflächenbeladung erzielt werden. Die Einheit der Kapazitätsflächenbeladung beträgt mAh/cm². Eine gängige automotive Batteriezelle hat eine Kapazitätsflächenbeladung von 2,5 bis 4 mAh/cm^{2.} Eine Kapazitätsflächenbeladung von 3,5 mAh/cm² hat bei einer normalen Verpressung der Elektrodenschicht etwa eine Elektrodendicke von 50 Mikrometern. Eine Erhöhung der Dicke der Elektrodenschicht auf ca. 100 Mikrometern würde die Kapazitätsflächenbeladung auf theoretisch 7 mAh/cm² erhöhen. Jedoch kommt es aufgrund der längeren Diffusionswege und von lokalen Lithiumionen-Konzentrationsschwankungen zu Problemen. Die Strombelastbarkeit sinkt stark ab und die vollen 7 mAh/cm² sind nur noch bei C-Raten von unter 0,1 bis 0,2 C zu erhalten. Für elektronische Geräte die weder hohe C-Raten, Peakströme oder hohe Laderaten benötigen, würde eine solche Beschichtung ausreichen. Solche Batterien können bspw. für Notausgangsbeleuchtungen oder mobile MP3-Player eingesetzt werden. Bei einer automotiven Anwendung kommt es aufgrund hoher Lade-/Entladeraten sowie der hohen Peakströme durch Beschleunigung und Rekuperation zu Problemen. Bei einer Strombelastbarkeit von 1 C wird nicht mehr die volle Kapazität der Fläche gleichmäßig ausgenutzt, was dazu führt, dass die Bereiche dichter zum Separator hin stärker beansprucht werden als die Bereiche in der Nähe zum Stromableiter. Bei einem Schnellladen unterhalb von 20 Minuten bedeutet dies eine C-Rate von mindestens 3 C. Aus der EP 2 749 396 A1 ist eine Batterie mit einer Anode mit einer Kathode und mit einem Separator in der Nähe zur Anode und zur Kathode bekannt. Die Kathode weist fingerartig ineinandergreifende Streifen aus aktiven Kathodenmaterialien auf, wobei die fingerartig ineinandergreifenden Materialstreifen als eine Vielzahl von Schichten aus einem ersten Material und einem zweiten Material angeordnet sind. Diese Materialien enthalten jeweils Lithium, wobei das erste Material eine geringere Lithiumkonzentration aufweist als das zweite Material. Das erste Material bildet Porenkanäle. An der Anode und an der Kathode sind jeweils Stromableiter außen angeordnet. Die Anode kann fingerartig ineinandergreifende Materialstreifen umfassen, wobei eines der Materialien Porenkanäle bildet. Die Porenkanäle spielen eine wichtige Rolle als Senke oder Quelle, um die Bewegung der Lithiumionen zu erleichtern. Diese Porenkanäle ermöglichen kürzere Wege der Lithiumionen. Dies ermöglicht die Verwendung von dickeren Elektroden. Es ist ferner ein Verfahren zum Herstellen der Batterie beschrieben, wobei ein erstes aktives Material mit einem Lösungsmittel gemischt wird, um ein erstes Elektrodenaktivmaterial herzustellen. Es wird ein zweites aktives Material mit einem Lösungsmittel gemischt, um ein zweites Elektrodenaktivmaterial zu erzeugen. Das erste Elektrodenaktivmaterial und das zweite Elektrodenaktivmaterial werden als fingerartig ineinandergreifende Streifen auf eine Fläche koextrudiert. Die Koextrusion wird mittels eines Druckkopfes durchgeführt, der es ermöglicht, dass unterschiedliche Fluide abwechselnd auf einen Punkt zusammenströmen, wobei die beiden Fluide nicht gemischt werden. Es wird das Lösungsmittel aus dem ersten und zweiten Elektrodenaktivmaterialien entfernt, um eine Batteriekathode zu erzeugen. Es werden ein Separator an der Kathode und eine Anode an dem Separator angeordnet, um die Batterie zu bilden. Es kann bei dem Mischen ein leitendes Mittel, wie etwa Kohlenstoff verwendet werden. Durch das Koextrudieren werden die unterschiedlich dichten Elektroden in Strangform hergestellt. Die so hergestellten Kathoden haben eine größere Leistung und eine höhere Volumen-Energiedichte. Dieser Aufbau hat den Nachteil einer geringen Performance, da das Verhältnis der Oberfläche und der Volumen von aktiven Materialen zu inaktiven Materialien nicht optimal ist. Ferner ist das Herstellungsverfahren aufwendig und langsam.

Aus der EP 2 814 091 A1 ist eine Feststoffbatterie mit einer Beschichtung zur Verbesserung der Oberflächenionendiffusion und ein Herstellungsverfahren für diese Feststoffbatterien bekannt. Die Kathode und/oder die Anode weisen ein Batteriematerial auf, wobei das Batteriematerial Poren aufweist. Die innere Fläche der Poren ist mit einer Oberflächendiffusionsverbesserungsbeschichtung beschichtet. Durch die poröse Struktur der aktiven Elektrodenmaterialien und die Beschichtung der Poren mit Festelektrolytschicht sollen die Diffusion gefördert und damit die Batterie verbessert werden.

Aus der WO 2017/023900 A1 sind eine Batterie mit einer metallischen Lithium-Anode und ein Verfahren zur Herstellung der Batterie bekannt. Es wird ein Substrat mit einer ersten Oberfläche gebildet, wobei die erste Oberfläche eine Mehrzahl von Poren aufweist. Die Poren bilden Hilfskanäle und enthalten Lithiummetall. Das Verfahren umfasst das Einbringen von Lithiummetall in mindestens einen Teil der Poren. Es wird ein Elektrolyt gebildet, der zwischen der ersten Oberfläche des Substrats und einer Kathode angeordnet ist. Der Elektrolyt ist so konfiguriert, das er Lithiumionen durch die Diffusion zwischen dem Substrat und der Kathode reversibel transportiert. In einigen Ausführungsformen dient das Substrat sowohl als Anode als auch als elektrisch leitender Stromkollektor. Die Batterie weist somit einen mikroporösen Stromkollektor auf, wobei Lithiummetall in den Poren eingebaut ist. Das mikroporöse Substrat ist ein Metall wie etwa Kupfer oder Nickel. Das Metall ist mit Lithium elektrisch-chemisch stabil. Alternativ kann das elektrisch leitfähige Material ein leitfähiges Polymer sein oder Kohlenstoff-Nanoröhren umfassen. Auf ein Anodenmaterialien wie Graphit oder Lithium wird verzichtet. Das mikroporöse Substrat kann so als Anode mit einem Reservoir von Lithiummetall und als ein Stromkollektor dienen. Das mikroporöse Substrat kann den Austausch von Lithiummetall nahe der Anoden/Kollektorgrenzfläche verbessern. Das heißt die poröse Substratstruktur kann das Volumen erhöhen, in dem Lithium in den Stromkollektor eingebaut werden kann. Als ein mögliches Ergebnis soll die Batterieleistung aufgrund höherer Lithiumdiffusionsraten verbessert werden über die Lebensdauer der Batterie. Daher soll diese Lithiumionenbatterie eine höhere Effizienz, eine höhere Leistungsdichte und/oder eine bessere Zykluslebensdauer aufweisen. Die Poren innerhalb des Substrats können eine kugelförmige, halbkugelförmige, zylindrische, konisch, zufällige oder psydo-zufällige Form haben. Die Poren können einen regelmäßigen oder unregelmäßigen Abstand haben. Die Poren können in einer regelmäßigen Anordnung angeordnet sein, die beispielsweise einer hexagonalen, einer quadratischen, einer linearen oder einer anderen Gruppierungsanordnung. Zum Beispiel kann eine Vielzahl von kugelförmigen Poren in einem quadratischen Gitter mit einem Mitte-zu-Mitte-Abstand von ungefähr von 100 Mikrometern angeordnet sein. Das quadratische Gitter kann aus einer Vielzahl von gestapelten Porenschichten innerhalb des mikroporösen Substrats wiederholt werden. Als Herstellungsverfahren ist angeben, dass, wenn das Substratmaterial Kupfer oder Nickel ist, dieses mit einer erwärmten Sauerstofflegierung oxidiert wird. Nach der Oxidation können die Poren im Substratmaterial durch Nass- oder Trockenätzen geätzt werden. Als alternativer Herstellungsprozess kann die mikroporöse Struktur mit einer additiven Materialabscheidung hergestellt werden. Zum Beispiel kann die mikroporöse Struktur unter Verwendung eines 3D-Druckers, Galvanisieren und/oder Elektroplattierung, strukturierter Metallverdampfung oder andere Materialabscheidungstechniken gebildet werden. Diese Batterie hat den Nachteil, dass eine metallische Lithiumanode im Laufe der Zyklen verbraucht wird, da fortlaufend Lithium aufgelöst und abgeschieden wird.

Die gattungsbildende DE 10 2012 215 921 A1 offenbart eine Batterie, z.B. einen Lithium-Akkumulator, mit porösen, d.h. Hohlräume aufweisenden Elektroden. Diese Hohlräume bzw. Vertiefungen haben einen Durchmesser von 1 Mikrometer bis 30 Mikrometer. Die Vertiefungen dienen dazu, den Wirkungsgrad sowie die Leistungsdichte der Batterie zu erhöhen und die ionische Leitfähigkeit zu steigern. Eine Elektrodenvorläuferschicht wird durch zwei mikrostrukturierte Walzen mit den Vertiefungen versehen, indem diese Elektrodenvorläuferschicht perforiert wird bzw. die Vertiefungen eingeprägt werden. Die Mikrostruktur auf den Walzen besteht aus einer Vielzahl von Dornen. Die Vertiefungen können beispielsweiseeinen runden, quadratischen oder eckigen Querschnitt aufweisen und in einem Quadratmuster, Rechteckmuster oder in einem hexagonalen Muster ausgebildet werden.

Aus der US 2009 / 004 570 A1 ist eine Lithium-Ionen-Batterie mit einer Anode und einer Kathode mit jeweils einem Stromableiter und einer darauf aufgebrachten Elektrodenschicht bekannt. Bei der Herstellung wird das Elektrodenmaterial auf den Stromableiter aufgebracht. Nach einer Trocknungszeit werden die Schlitze eingepresst, eingeprägt oder ausgestanzt.

Die EP 3 316 353 A1 offenbart eine Batteriezelle, insbesondere eine Lithium-Ionen-Batteriezelle mit einer Kathode und einer Anode, wobei ein Kathoden-Aktivmaterial und das Anoden-Aktivmaterial derart strukturiert sind, dass sich Hohlräume zwischen zusammenhängenden Aktivmaterialbereichen befinden. Die Hohlräume sind mit einem elektrisch isolierenden Material gefüllt. Diese Hohlräume sollen dazu dienen, dass bei einem Nagelpenetrationstest der Nagel nicht nur Aktivmaterialbereiche durchstößt, sondern auch die islolierenden Hohlräume, wobei der ohmsche Widerstand in Bereichen um den Nagel höher ist, wodurch die Verlustleistung und die damit die Erwärmung geringer ausfällt. Das Elektrodenaktivmaterial mit den Hohlräumen wird mittels Siebdruck auf eine Anoden-/Kathoden-Folie aufgebracht.

Die US 2018/0138 493 A1 zeigt eine Batterie , z.B. eine Lithium-Ionen-Batterie, mit einer auf einem Stromableiter aufgetragenen Elektrodenschicht. Die Elektrodenschicht der Anode und der Kathode weisen Hilfskanäle in Form von Schlitzen auf. Die Schlitze weisen eine Länge zwischen 10 und 10.000 Mikrometern und eine Breite zwischen 0,5 und 200 Mikrometern auf. Zur Herstellung der Elektroden wird ein magnetisches, leitfähiges Material mit einem Lithium-leitfähigen Polymer gemischt. Aus der Mischung werden Röhren mit einem Durchmesser von 10-20 Mikrometern geformt. Anfangs weisen die Röhren keine Füllung auf und werden später mit einem leitenden, magnetischen Material gefüllt. Die Röhren werden mit einem Aktivmaterialslurry gemischt, das auf einen Stromableiter aufgetragen wird. Das Auftragen kann durch Walzen geschehen. Danach wird ein Magnetfeld angelegt, um die Röhren senkrecht zum Stromableiter auszurichten. Die Länge der Röhren entspricht der Hälfte der Dicke des Slurrys. Die ausgerichteten Röhren bilden elektrische leitfähige Kanäle bzw. lonenkanäle.

Es sind somit unterschiedliche Verfahren zur Bildung von Hilfskanälen in Elektroden bereits bekannt.

Der Erfindung liegt daher die Aufgabe zugrunde, das gattungsbildende Verfahren zur Herstellung der Batterie zu verbessern.

Diese der Erfindung zu Grunde liegende Aufgabe wird nun durch ein Verfahren mit den Merkmalen des Patentanspruches 1 gelöst.

Die Hilfskanäle sind erfindungsgemäß sowohl in einer Elektrodenschicht der Kathode als auch in einer Elektrodenschicht der Anode ausgebildet. Die Hilfskanäle bilden eine Matrix und sind nicht strangweise, sondern punktweise in der Elektrodenschicht aufgebaut. Das Oberflächen- und Volumenverhältnis der Aktivmaterialien zu Nicht-Aktivmaterialien mit ggf. größeren Elektrodendicken ist dadurch verbessert, dass die Hilfskanäle sowohl für die Anode als auch für die Kathode geschaffen werden. Hierdurch können größere Elektrodenschichtdicken bei gleichzeitig hohen C-Raten gebildet werden.

Die Kathode kann als Aktivmaterial Graphit aufweisen. Die Anode kann als Aktivmaterial eine Lithiumverbindung aufweisen. Die Stromableiter können aus Kupfer und Aluminium gefertigt sein. Der Separator ist durch eine Polymerstruktur gebildet. Als Elektrolyt können Salze LiPF₆, LiBF₄ oder LiBOB gelöst in wasserfreien aprotischen Lösungsmitteln wie z. B. Ethylencarbonat, Propylencarbonat, Dimethylcarbonat, Diethylencarbonat der 1,2,-Dimethodyethan oder Polymere aus PVDF oder PVDF-HFP in einer Lithium-Polymer-Batterie oder Li₃PO₄N verwendet werden.

Es wird eine Matrix mit den Hilfskanälen auf dem Stromableiter sowohl für die Anode als auch für Kathode vor der eigentlichen Beschichtung mit Aktivmaterial aufgebracht. Die Hilfskanäle werden punktweise aufgebaut bzw. hergestellt, was den Vorteil gegenüber einem strangweisen Aufbau hat, dass die Performance der Batterie verbessert ist, da das Oberflächen- und Volumenverhältnis von Akitvmaterialien zu Nicht-Aktivmaterialien verbessert ist. Dieses Aufbringen kann nicht erfindungsgemäß durch Drucken, Sprühen, Rakeln, Siebdruckverfahren oder erfindungsgemäß durch Spritzen erfolgen. Die Hilfskanäle sind senkrecht zum Stromableiter ausgerichtet. Die Hilfskanäle können noppenartig, kegelförmig, schlauchförmig, zylindrisch, quaderförmig bzw. rechteckig oder pyramidisch sein. Ferner ist es denkbar, dass die Hilfskanäle eine Wabenform aufweisen. Solche eine Wabenstruktur ist denkbar, jedoch besitzt eine schlauchförmige Struktur der Hilfskanäle das beste Verhältnis von Umgebungs-Aktiv-Material zur Oberfläche der Hilfskanäle.

Die Hilfskanäle können auf schnelle und einfache Weise über die Einspritzung einer Flüssigkeit oder einer gelierten Flüssigkeit in einen im Wesentlichen flüssigen Elektrodenfilm erzeugt werden.

Die Hilfskanäle können eine Länge zwischen 1 und 100 % der Elektrodenfilmdicke besitzen. Die Hilfskanäle haben vorzugsweise einen Durchmesser von 0,5 bis 5000 µm, bevorzugt zwischen 5 und 2000 µm, weiter bevorzugt zwischen 10 und 1000 µm und besonders bevorzugt zwischen 20 und 500 µm. Die Hilfskanäle können durch eine offene Struktur ohne Füllung gebildet sein.

Die Hilfskanäle können alternativ durch eine geschlossene Struktur gefüllt mit Hilfsstoffen sein. Hilfsstoffe können Leitadditive wie Leitruß oder metallische Partikel sein. Die Hilfsstoffe können Aktivmaterialien anderer Dichte, Zusammensetzung, Spezifikation und elektrochemischer, physischer Eigenschaften aufweisen. Es können dabei alle Hilfskanäle oder nur ein Teil der Hilfskanäle Aktivmaterialien anderer Spezifikationen aufweisen. Es können alle Hilfskanäle oder nur ein Teil der Hilfskanäle mit oder ohne Füllung ausgestattet sein. Es können alle Hilfskanäle oder nur ein Teil der Hilfskanäle mit einem Leitadditiv ausgestattet bzw. gefüllt sein. Die Elektrodenschicht kann Hilfskanäle mit Aktivmaterial, Leitadditiven und Hilfskanäle ohne Füllung aufweisen. Es können mehr als 50% der Hilfskanäle mit einer Füllung versehen sein. Es können mehr als 50% der Hilfskanäle ein Leitadditiv aufweisen.

Eine konventionelle Lithium-Ionen-Batterie hat etwa eine Verdichtung von 24 bis 30 %. Wenn nun eine 30%ige Restporosität der Elektrodenschicht durch senkrecht ausgerichtete Hilfskanäle erzielt ist, sind hohe C-Raten mit dicken Elektrodenschichten auf einfache Art und Weise realisierbar.

Für die folgende Überlegung wird die Annahme getroffen, dass die nutzbare Restporosität für den Transport bei 15% anstatt bei 30% liegt und nur die letzten 30 bis 40 µm zum Separator hin eine höhere Porosität haben. Die Flächenbeladung soll bei ca. 8 mAh/cm² liegen. Daraus ergibt sich eine Elektrodendicke von ca. 100 µm. Im Bereich von 50 bis 70% der Elektrodenschicht - Startpunkt ist hierbei der Stromableiter - kommt es zu einer massiven Erhöhung der Lithiumionenkonzentration, was zu einer Abnahme der Diffusionsgeschwindigkeit von Lithiumionen führt. Eine hohe Lithiumionenkonzentration muss sich nun durch geeignete Transportwege quetschen, was zusätzlich noch zu lokalen Überspannungen führt. Im Bereich von 70 bis 100%, wobei 100% am Separator anliegt, können die Lithiumionen mit sehr viel weniger Widerstand an die Elektrolyt-Bulk-Phase abgegeben werden. Hier besteht die Gefahr, dass bei einer höheren C-Rate die Bereiche des Separators stärker beansprucht werden und schneller altern. Wenn nun die Elektrodenschicht mit einer Matrix aus Hilfskanälen durchzogen ist, dann kommt es zu keinem Aufstauen der Lithiumionen im Bereich 50 bis 70%. Zum Beispiel können 10% der Elektrodenschicht aus Hilfskanälen bestehen. Zusätzlich liegt das Lithium-Konzentrationsprofil über der Elektrodenschicht deutlich tiefer, trotz der vergrößerten Elektrodendicke auf ca. 110 µm bei gleicher Flächenbeladung von 8mAh/cm². Modellrechnungen haben ergeben, dass eine ca. 110 µm dicke Elektrode mit 8 mAh/cm² und einer Belastung von 3 C die gleiche maximale Lithiumkonzentration Elektrodenschichtprofil aufweist, wie konventionelle Zelle mit 50 µm, 3,5 mAh/cm² und 11 C.

Es gibt nun eine Vielzahl von Möglichkeiten, das Verfahren in vorteilhafter Art und Weise auszugestalten und weiterzubilden. Hierfür darf zunächst auf die dem Patentanspruch 1 nachgeordneten Patentansprüche verwiesen werden. Im Folgenden werden bevorzugte Ausgestaltungen der Erfindung anhand der Zeichnung und der dazugehörigen Beschreibung näher erläutert. In der Zeichnung zeigt:
- Fig. 1: in einer schematischen Darstellung einen Teil einer Batterie, nämlich eine Elektrodenschicht, einen Separator und einen Stromableiter,
- Fig. 2: in einer schematischen Darstellung eine Anordnung zur Herstellung einer entsprechenden Elektrodenschicht auf dem Stromableiter,
- Fig. 3: in einer schematischen Darstellung einen Stromableiter mit zwei unterschiedlich ausgebildeten Elektrodenschichten, nämlich einer Elektrodenschicht mit Hilfskanälen ohne Füllung und einer Elektrodenschicht mit Hilfskanälen mit Füllung, sowie
- Fig. 4: in einer schematischen Darstellung unterschiedliche ausgestaltete Formen von Hilfskanälen.

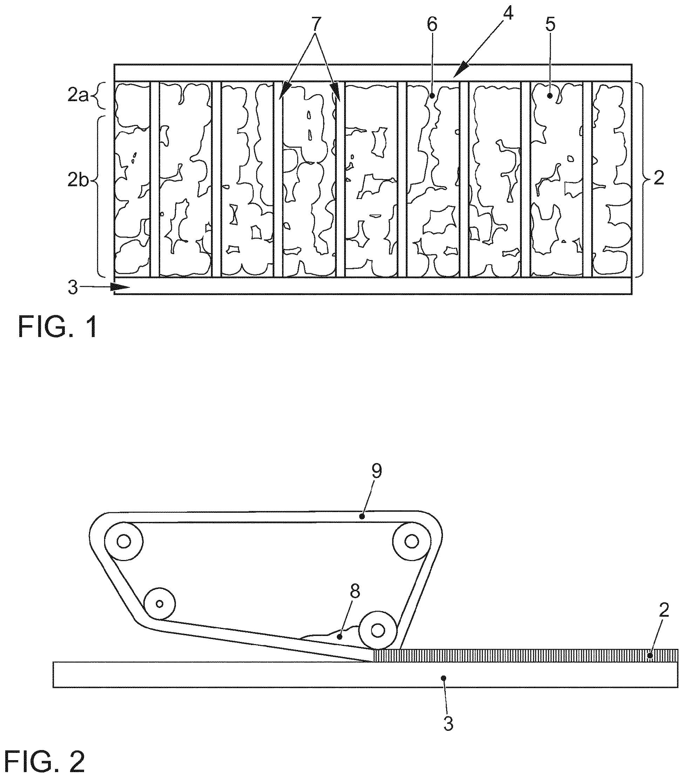

In Fig. 1 ist ein Teil einer Batterie 1 dargestellt. Die Batterie 1 weist eine Elektrodenschicht 2, einen Stromableiter 3 und einen Separator 4 auf. Die Elektrodenschicht 2 weist ein Aktivmaterial 5 auf, wobei das Aktivmaterial 5 Poren 6 aufweist. Die Poren 6 können Kanäle und Kammern bilden. Das Aktivmaterial 5 ist dabei zwischen dem Separator 4 und dem Stromableiter 3 angeordnet. Der Stromableiter 3 und der Separator 4 erstrecken sich parallel zueinander. Die Elektrodenschicht 2 weist vorzugsweise eine im Wesentlichen konstante Schichtdicke auf. Die Elektrodenschichtdicke kann insbesondere größer als 50 µm, insbesondere größer als 80 µm und vorzugsweise 100 µm sein. Vorzugsweise liegt die Elektrodenschichtdicke im Bereich zwischen 80 und 120 µm, beispielsweise kann die Elektrodenschichtdicke 100 oder 110 µm betragen.

Die Elektrodenschicht 2 ist mit Hilfskanälen 7 versehen. Die Hilfskanäle 7, 7a bis 7e sind punktweise im Aktivmaterial 5 aufgebaut. Die Hilfskanäle 7 erstrecken sich vorzugsweise zwischen 1 und 100% der Elektrodenschichtdicke. In der dargestellten Ausgestaltung erstrecken sich die Hilfskanäle 7 über 100% der Elektrodenschichtdicke. Insbesondere erstrecken sich die Hilfskanäle 7 über mindestens 50% der Elektrodenschichtdicke.

Die in Fig. 1 dargestellte Anordnung kann entweder eine Anode oder eine Kathode bilden. Sowohl die Anode als die Kathode weisen die entsprechenden Hilfskanäle 7 auf. Die Hilfskanäle 7 erstrecken sich senkrecht zwischen der Elektrodenschicht 2 und dem Separator 4.

Die Elektrode besteht aus dem Aktivmaterial und dem Ableiter. Nicht näher bezeichnet ist hier ein Elektrolyt, das durch ein flüssiges oder gelartiges Medium gebildet ist, dass den Transport der Ionen zwischen der Anode und der Kathode gewährleistet.

In Fig. 2 ist ein nicht erfindungsgemäßes Herstellungsverfahren dargestellt. Für eine kontinuierliche Ausbildung der Hilfskanäle 7 kann ein Gel 8 mit oder ohne Leitadditiven (nicht dargestellt) mit einem Rollrakelverfahren oder einem Druckverfahren auf den Stromableiter 3 aufgetragen werden. In Fig. 2 ist ein entsprechender Rollrakel 9 dargestellt. Alternativ kann die Matrix mit den Hilfskanälen 7 in einem Druckverfahren aufgetragen werden (nicht erfindungsgemäß). Insbesondere können die Hilfskanäle 7 gedruckt werden. Heutige Drucker mit Geltinten schaffen bereits weitaus höhere Auflösungen als für die Ausbildung der Hilfskanäle 7 benötigt werden. Alternativ können die Hilfskanäle 7 auf den blanken Stromableiter 3 direkt aufgetragen werden (nicht erfindungsgemäß).

Erfindungsgemäß können die Hilfskanäle 7 nachträglich in die Elektrodenschicht 2 eingefügt werden. Dies kann über die Einspritzung einer Flüssigkeit oder gelierten Flüssigkeit in den flüssigen Elektrodenfilm erfolgen. Die eingespritzte Flüssigkeit bzw. die geierte Flüssigkeit kann keine Additive oder Additive aufweisen.

Ein dritter nicht erfindungsgemäßer Weg ist die physische Perforierung bzw. das Prägen eines festen, aber weichen Elektrodenfilms mit z.B. einer Nadelwalze oder einem Kalander mit einer Prägewalze.

Alle Verfahren erzeugen letztlich eine schlauchartige senkrechte Hilfskanalstruktur in der Elektrodenschicht 2. Diese Hilfskanalstruktur kann entweder keine Füllung oder eine Füllung aus Additiven, wie Leitruß oder gering verdichtetem Aktivmaterial aufweisen.

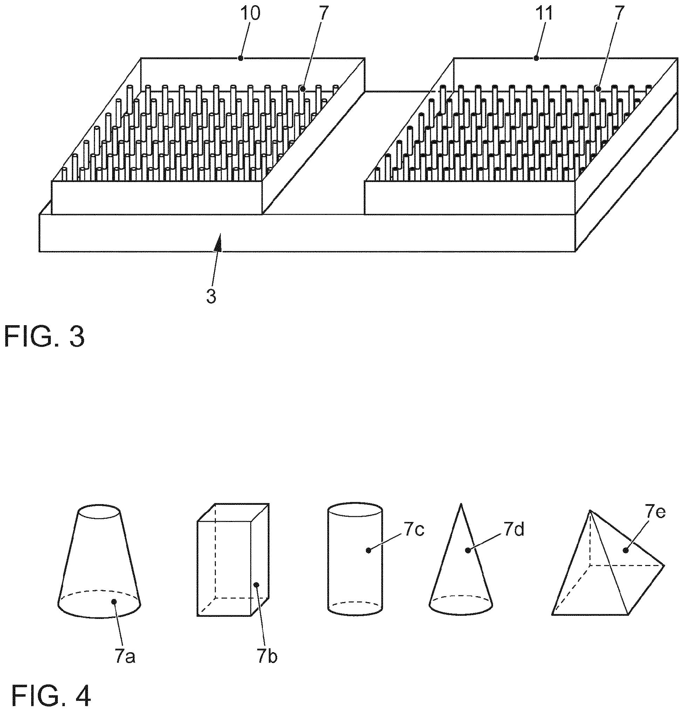

In Fig. 3 ist eine Elektrodenschicht 10 mit Hilfskanälen ohne Füllung und eine Elektrodenschicht 11 mit Hilfskanälen mit Füllung dargestellt. Diese sind jeweils auf einem Stromableiter 3 ausgebildet.

In Fig. 4 sind verschiedene Formen von Hilfskanälen dargestellt. Es sind konische Hilfskanäle 7a und quaderförmige Hilfskanäle 7b, zylindrische Hilfskanäle 7c, kegelförmige Hilfskanäle 7d und pyramidenförmige Hilfskanäle 7 e dargestellt. Die Hilfskanäle können einen Durchmesser von 0,5 bis 5000 µm, bevorzugt zwischen 5 und 2000 µm und weiter bevorzugt zwischen 10 und 1000 µm. am meisten bevorzugt zwischen 20 und 500 µm aufweisen. Als Additive können Leitadditive wie Leitruß oder metallische Partikel eingesetzt werden. Hilfsstoffe können ferner Aktivmaterialen anderer Verdichtung, Zusammensetzung, Spezifikationen und elektrochemischer, physischer Eigenschaften sein.

### BEZUGSZEICHENLISTE

- 1: Batterie
- 2: Elektrodenschicht
- 3: Stromableiter
- 4: Separator
- 5: Aktivmaterial
- 6: Poren
- 7: Hilfskanal
- 7a: konischer Hilfskanal
- 7b: rechteckiger Hilfskanal
- 7c: zylindrischer Hilfskanal
- 7d: kegelförmiger Hilfskanal
- 7e: pyramidischer Hilfskanal
- 8: Gel
- 9: Rollrakel
- 10: Elektrodenschicht mit Hilfskanälen ohne Füllung
- 11: Elektrodenschicht mit Hilfskanälen mit Füllung

## Patentansprüche

1. Verfahren zur Herstellung einer Batterie (1), nämlich eine Lithium-Ionen-Batterie, mit einer Elektrodenschicht (2) und einem Stromableiter (3), wobei die Elektrodenschicht (2) in einem Aktivmaterial (5) mehrere Hilfskanäle (7, 7a bis 7e) aufweist, **wobei** die Hilfskanäle (7, 7a bis 7e) sowohl an einer Kathode als auch an einer Anode ausgebildet sind, **dadurch gekennzeichnet, dass** die Hilfskanäle (7, 7a bis 7e) über die Einspritzung einer Flüssigkeit oder einer gelierten Flüssigkeit in einen im Wesentlichen flüssigen Elektrodenfilm erzeugt werden.

2. Verfahren nach Anspruch 1, **dadurch gekennzeichnet, dass** die Hilfskanäle (7) einen Durchmesser von 0,5 bis 5000 µm, insbesondere zwischen 5 und 2000 µm und weiter bevorzugt zwischen 10 und 1000 µm am meisten bevorzugt zwischen 20 und 500 µm aufweisen.

3. Verfahren nach einem der vorstehenden Ansprüche, **dadurch gekennzeichnet, dass** die Hilfskanäle (7, 7a bis 7e) punktweise im Aktivmaterial (5) aufgebaut sind.

4. Verfahren nach einem der vorstehenden Ansprüche, **dadurch gekennzeichnet, dass** die Hilfskanäle (7, 7a bis 7e) eine offene Struktur ohne Füllung aufweisen.

5. Verfahren nach einem der Ansprüche 1 oder 2, **dadurch gekennzeichnet, dass** die Hilfskanäle (7, 7a bis 7e) eine geschlossene Struktur mit Hilfsstoffen aufweist.

6. Verfahren nach dem Anspruch 5, **dadurch gekennzeichnet, dass** die Hilfsstoffe Leitadditive aufweisen.

7. Verfahren nach einem der Ansprüche 5 oder 6, **dadurch gekennzeichnet, dass** die Hilfsstoffe ein Aktivmaterial mit einer anderen Verdichtung, einer anderen Zusammensetzung, einer anderen spezifischen Spezifikation und/oder anderer elektrochemischer und/oder anderer physischer Eigenschaften als das Aktivmaterial der sonstigen Elektrodenschicht aufweist.

8. Verfahren nach einem der vorstehenden Ansprüche, **dadurch gekennzeichnet, dass** mehr als 50% der Hilfskanäle (7, 7a bis 7e) mit einer Füllung versehen sind.

9. Verfahren nach einem der vorstehenden Ansprüche, **dadurch gekennzeichnet, dass** mehr als 50% der Hilfskanäle (7, 7a bis 7e) ein Leitadditiv aufweist.

## Claims

1. Method for producing a battery (1), specifically a lithium-ion battery, having an electrode layer (2) and a current collector (3), wherein the electrode layer (2) has a plurality of auxiliary channels (7, 7a to 7e) in an active material (5), **wherein** the auxiliary channels (7, 7a to 7e) are formed both on a cathode and on an anode, **characterized in that** the auxiliary channels (7, 7a to 7e) are created by injecting a liquid or a gelled liquid into a substantially liquid electrode film.

2. Method according to Claim 1, **characterized in that** the auxiliary channels (7) have a diameter of 0.5 to 5000 µm, in particular between 5 and 2000 µm, further preferably between 10 and 1000 µm and most preferably between 20 and 500 µm.

3. Method according to either of the preceding claims, **characterized in that** the auxiliary channels (7, 7a to 7e) are built up point-by-point in the active material (5).

4. Method according to one of the preceding claims, **characterized in that** the auxiliary channels (7, 7a to 7e) have an open structure without filling.

5. Method according to either of Claims 1 and 2, **characterized in that** the auxiliary channels (7, 7a to 7e) have a closed structure with auxiliaries.

6. Method according to Claim 5, **characterized in that** the auxiliaries comprise conductive additives.

7. Method according to either of Claims 5 and 6, **characterized in that** the auxiliaries comprise an active material with a different degree of densification, a different composition, a different intrinsic specification and/or different electrochemical and/or different physical properties than the active material of the other electrode layer.

8. Method according to one of the preceding claims, **characterized in that** more than 50% of the auxiliary channels (7, 7a to 7e) are provided with a filling.

9. Method according to one of the preceding claims, **characterized in that** more than 50% of the auxiliary channels (7, 7a to 7e) comprise a conductive additive.

## Revendications

1. Procédé de fabrication d'une batterie (1), à savoir d'une batterie lithium-ion, contenant une couche d'électrode (2) et un collecteur de courant (3), la couche d'électrode (2) comprenant plusieurs canaux auxiliaires (7, 7a à 7e) dans un matériau actif (5), les canaux auxiliaires (7, 7a à 7e) étant formés aussi bien au niveau d'une cathode qu'au niveau d'une anode, **caractérisé en ce que** les canaux auxiliaires (7, 7a à 7e) sont produits par l'intermédiaire de l'injection d'un liquide ou d'un liquide gélifié dans un film d'électrode essentiellement liquide.

2. Procédé selon la revendication 1, **caractérisé en ce que** les canaux auxiliaires (7) présentent un diamètre de 0,5 à 5 000 µm, notamment compris entre 5 et 2 000 µm et de manière davantage préférée entre 10 et 1 000 µm, de manière préférée entre toutes entre 20 et 500 µm.

3. Procédé selon l'une quelconque des revendications précédentes, **caractérisé en ce que** les canaux auxiliaires (7, 7a à 7e) sont construits de manière ponctuelle dans le matériau actif (5).

4. Procédé selon l'une quelconque des revendications précédentes, **caractérisé en ce que** les canaux auxiliaires (7, 7a à 7e) présentent une structure ouverte sans remplissage.

5. Procédé selon l'une quelconque des revendications 1 ou 2, **caractérisé en ce que** les canaux auxiliaires (7, 7a à 7e) présentent une structure fermée avec des matières auxiliaires.

6. Procédé selon la revendication 5, **caractérisé en ce que** les matières auxiliaires comprennent des additifs conducteurs.

7. Procédé selon l'une quelconque des revendications 5 ou 6, **caractérisé en ce que** les matières auxiliaires comprennent un matériau actif ayant un autre compactage, une autre composition, une autre spécification spécifique et/ou d'autres propriétés électrochimiques et/ou physiques que le matériau actif du reste de la couche d'électrode.

8. Procédé selon l'une quelconque des revendications précédentes, **caractérisé en ce que** plus de 50 % des canaux auxiliaires (7, 7a à 7e) sont munis d'un remplissage.

9. Procédé selon l'une quelconque des revendications précédentes, **caractérisé en ce que** plus de 50 % des canaux auxiliaires (7, 7a à 7e) comprennent un additif conducteur.
